# EUROPEAN PATENT APPLICATION

(11) **EP 2 476 582 A1**
(43) Date of publication of application: **18.07.2012**
(21) Application number: 12150607.5
(22) Date of filing: 10.01.2012
(51) Int. Cl.: B60N 2/28

(54) **Seat belt lock device of a child car seat, and a child car seat**

(30) Priority: 13.01.2011 JP 2011004746
(71) Applicant: Aprica Children's Products Inc., Chuo-ku, Osaka-shi Osaka 542-0082 (JP)
(72) Inventor: Shibata, Yuji, Osaka, Osaka 542-0082 (JP)
(74) Representative: Prüfer & Partner GbR European Patent Attorneys

(57) **Abstract**

A seat belt lock device 21 includes: a main body case 23 having a seat belt insertion hole 22; a belt retaining member 24 that is supported by the main body case 23; a belt lock member 25 that restricts movement of a seat belt; a biasing unit that biases the belt lock member 25; an operation portion 26 that, when shifted from a first position to a second position, presses the belt lock member 25 toward a belt unlock/release position where the seat belt is unlocked or released; and a coupling portion that couples the operation portion 26 and the belt retaining member 24 so that they can operate together.

## Description

### Technical Field

The present invention relates to seat belt lock devices for use in child car seats, and child car seats including the same.

### Background Art

Child car seats that are used with an infant or a small child seated thereon when driving an automobile is fastened and secured to a seat of the automobile by using a seat belt installed in the automobile. In order to ensure the safety of the infant or small child seated on the child car seat, it is important to firmly secure the child car seat to the seat of the automobile by the seat belt. This requires the seat belt to be stably threaded at a predetermined position through the child car seat. In view of the safety, various seat belt lock devices have been developed which allow the seat belt to be held at a predetermined position in the child car seat. For example, Japanese Unexamined Patent Application Publication No. 2001-347860 discloses such a seat belt lock device.

### Summary of Invention

The seat belt lock device described in Japanese Unexamined Patent Application Publication No. 2001-347860 includes a main body case having a seat belt insertion hole that is long in the vertical direction and that opens at its lower end, and a belt holding portion that is pivotally supported by the main body case so as to cover the seat belt insertion hole. The belt holding portion has a plate-like lever portion, and a belt stopper portion provided so as to protrude outward from the lower end of the lever portion. The lever portion closes the belt insertion hole to hold a seat belt, when the seat belt is locked. The belt stopper portion closes the opening at the lower end of the seat belt insertion hole so as to prevent the seat belt from slipping off downward from the seat belt insertion hole.

The seat belt lock device described in Japanese Unexamined Patent Application Publication No. 2001-347860 has the following problem due to the above configuration. In order to tightly thread the seat belt through the child car seat when fastening and securing the child car seat to the seat of the automobile, the user needs to pull the seat belt in a direction in which the seat belt is drawn out of the seat belt lock device, after inserting the seat belt through the seat belt lock device to thread the seat belt through the child car seat.

As described above, the lever portion and the belt stopper portion are integrally provided in the seat belt lock device of Japanese Unexamined Patent Application Publication No. 2001-347860. Thus, when pulling the seat belt in the above direction, the lever portion may follow the movement of the seat belt and pivot in an opening direction. In this case, the belt stopper portion also moves in the opening direction, thereby opening the opening at the lower end of the seat belt insertion hole. This may cause the seat belt to slip off downward from the seat belt insertion hole. As described above, the child car seat described in Japanese Unexamined Patent Application Publication No. 2001-347860 is disadvantageous in terms of convenience, because the seat belt tends to slip off from the seat belt lock device when attaching the child car seat to the seat of the automobile.

Moreover, in the child car seat described in Japanese Unexamined Patent Application Publication No. 2001-347860, the lever portion and the belt stopper portion may open together when the child car seat is subjected to impact due to a collision etc., whereby the seat belt may slip off from the seat belt lock device.

In view of the above problems, it is an object of the present invention to provide a seat belt lock device capable of being attached with greater convenience, and capable of stably locking a seat belt.

It is another object of the present invention to provide a highly stable child car seat including a seat belt lock device and capable of being attached with great convenience.

A seat belt lock device according to the present invention is provided in a child car seat that is secured to a seat of an automobile by threading a seat belt of the automobile therethrough. The seat belt lock device includes: a main body case having a seat belt insertion hole that extends in one direction from an opening end, and that is capable of receiving the seat belt therein from the opening end; a belt retaining member that is supported by the main body case so as to be movable between a closed position where the opening end is closed to prevent the seat belt inserted in the seat belt insertion hole from slipping off from the seat belt insertion hole, and an open position where the opening end is opened to allow the seat belt to be inserted and removed into and from the seat belt insertion hole; a belt lock member that is supported by the main body case so as to be movable between a belt lock position where the belt lock member presses the seat belt from one side of the seat belt inserted in the seat belt insertion hole, thereby pressing the seat belt against a wall surface that defines the seat belt insertion hole, and restricting movement of the seat belt, and a belt unlock/release position where the pressure on the seat belt is released to allow the seat belt to move; a biasing unit that biases the belt lock member toward the belt lock position; an operation portion that is supported by the main body case so as to be movable between a first position and a second position, and that when operated so as to move from the first position to the second position, contacts the belt lock member to press the belt lock member toward the belt lock unlock/release position; and a coupling portion that couples the operation portion and the belt retaining member so that the operation portion and the belt retaining member can operate together, wherein the coupling portion places the belt retaining member at the closed position when the operation portion is located at the first position, and the coupling portion places the belt retaining member at the open position when the operation portion is located at the second position.

According to this configuration, when the user shifts the operation portion from the first position to the second position, the belt retaining member moves to the open position, and the belt lock member is pressed by the operation portion to move toward the belt unlock/release position. Thus, the user can insert the seat belt into the seat belt insertion hole. If the user releases the operation portion thereafter, the belt lock member is moved to the belt lock position by the biasing unit, the operation portion is pushed back from the second position to the first position, and the belt retaining member is returned to the closed position. Thus, the seat belt inserted in the seat belt insertion hole is pressed and locked by the belt lock member, and is prevented by the belt retaining member from slipping off from the seat belt insertion hole.

In the present invention, in the case where a force toward the belt unlock/release position is applied to the belt lock member itself while the seat belt is locked, the belt lock member is separated from the operation portion, allowing only the belt lock member to move to the belt unlock/release position. That is, even if the belt lock member is moved toward the belt lock unlock/release position when the user pulls the seat belt inserted in the seat belt lock device in order to fasten and secure the child car seat to the seat of the automobile, the belt lock member is mechanically disconnected from the operation portion, and thus the respective positions of the operation portion and the belt retaining member are reliably maintained. Accordingly, the opening end of the seat belt insertion hole is reliably closed by the belt retaining member, whereby the seat belt can be reliably held within the seat belt insertion hole. Thus, the seat belt can be prevented from slipping off from the seat belt lock device when attaching the child car seat, whereby the attachment can be performed with greater convenience.

Moreover, even if the child car seat is subjected to impact due to a collision etc., the seat belt lock device can reliably hold the seat belt within the seat belt insertion hole as described above. Thus, the position where the seat belt restraining the child car seat is held can further be stabilized. Accordingly, the child car seat can be more stably fastened and secured to the seat of the automobile via the seat belt.

According to the above configuration, the user can perform the operation of inserting and removing the seat belt and the operation of locking and unlocking or releasing the seat belt, by merely operating the single operation portion. This makes it easier to install the child car seat on the seat of the automobile.

Preferably, the belt lock member is pivotally supported by the main body case via a shaft, one end of the belt lock member forms a clutch portion as a ridge that engages with the seat belt when the seat belt is locked, and the other end of the belt lock member forms a contact portion that contacts the operation portion. According to this configuration, the belt lock member pivots about the shaft to move between the belt lock position and the belt unlock/release position, thereby making the configuration more compact. Moreover, since the clutch portion can engage with the seat belt to lock the seat belt, movement of the seat belt can be more effectively restricted when the seat belt is locked.

Preferably, the coupling portion is formed by a first through hole and a second through hole that are provided in the belt retaining member, an operation portion shaft that is provided in the operation portion and is inserted in the first through hole, and a main body case shaft provided in the main body case and is inserted in the second through hole. According to this configuration, a coupling structure configured to allow the operation portion and the belt retaining portion to operate together can be implemented by a simpler configuration.

Preferably, the operation portion has an operation button placed so as to protrude outward from the main body case, and the operation portion moves from the first position to the second position when depressed toward the main body case. According to this configuration, the user can more easily operate the operation portion.

Preferably, the biasing unit is formed by a spring. According to this configuration, the biasing unit can be formed by using the spring, which is a less expensive member.

A child car seat that is secured to a seat of an automobile by threading a seat belt of the automobile therethrough includes: a sitting portion on which an infant or a small child is seated; a backrest portion that supports a back of the seated infant or small child from behind; and the seat belt lock device provided in an upper part on a back side of the backrest portion, and having any of the above characteristics.

According to the above configuration, the child car seat includes the seat belt lock device capable of providing the above advantages. Thus, the present invention can provide a highly stable child car seat that can be attached with great convenience.

According to the present invention, even if the belt lock member is moved toward the belt lock unlock/release position when the user pulls the seat belt inserted in the seat belt lock device in order to fasten and secure the child car seat to the seat of the automobile, the belt lock member is mechanically disconnected from the operation portion, and thus the respective positions of the operation portion and the belt retaining member are reliably maintained. Accordingly, the opening end of the seat belt insertion hole is reliably closed by the belt retaining member, whereby the seat belt can be reliably held within the seat belt insertion hole. Thus, the seat belt can be prevented from slipping off from the seat belt lock device when attaching the child car seat, whereby the attachment can be performed with greater convenience. Moreover, even if the child car seat is subjected to impact due to a collision etc., the seat belt lock device can reliably hold the seat belt within the seat belt insertion hole as described above. Thus, the position where the seat belt restraining the child car seat is held can be stabilized. Accordingly, the child car seat can be more stably fastened and secured to the seat of the automobile via the seat belt.

### Brief Description of Drawings

Fig. 1 is a perspective view of a child car seat according to an embodiment of the present invention.
Fig. 2 is a left side view of the child car seat according to the embodiment of the present invention.
Fig. 3 is an external view of a seat belt lock device according to the embodiment of the present invention shown in Fig. 2.
Fig. 4 is an enlarged view of a portion near a seat belt insertion hole shown in Fig. 3.
Fig. 5 is an external view of the seat belt lock device shown in Fig. 3, as viewed in the direction of arrow "V" in Fig. 3.
Fig. 6 is an external view of the seat belt lock device shown in Fig. 5, as viewed in the direction of arrow "VI" in Fig. 5.
Fig. 7 is a cross-sectional view of the seat belt lock device shown in Fig. 3, taken along line VII-VII in Fig. 3 and viewed from below.
Figs. 8A to 8C are external views of a belt lock member shown in Fig. 6, where Fig. 8A shows the belt lock member as viewed in the direction of Fig. 6, Fig. 8B shows the belt lock member of Fig. 8A as viewed from below, and Fig. 8C shows the belt lock member of Fig. 8A as viewed in the direction of arrow "C" in Fig. 8A.
Figs. 9A and 9B are external views of an operation portion shown in Fig. 7, where Fig. 9A shows the operation portion as viewed in the direction of arrow "a" in Fig. 9B, and Fig. 9B shows the operation portion as viewed in the direction of Fig. 7.
Fig. 10 is an external view of a belt retaining member shown in Fig. 7.
Fig. 11 is a diagram corresponding to Fig. 7, and showing the state in which the seat belt lock device in Fig. 7 is unlocked or released.

### Description of Embodiments

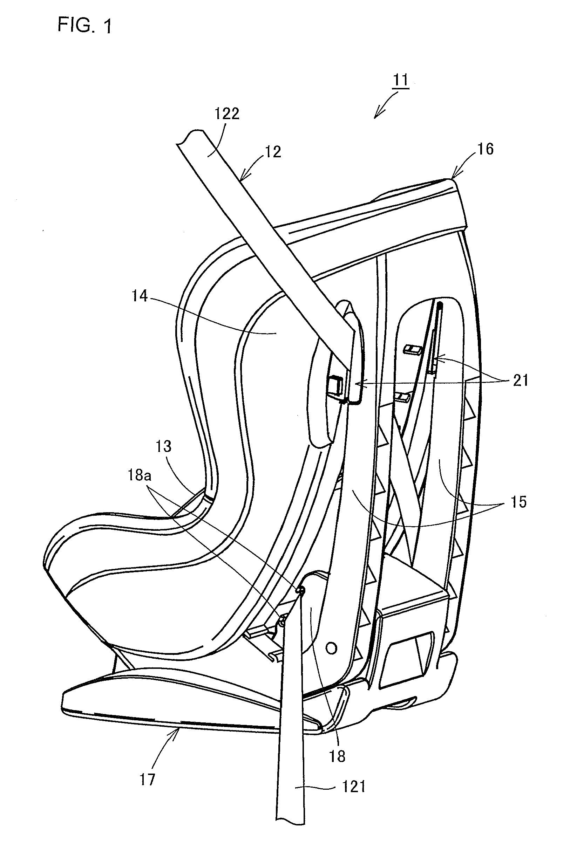

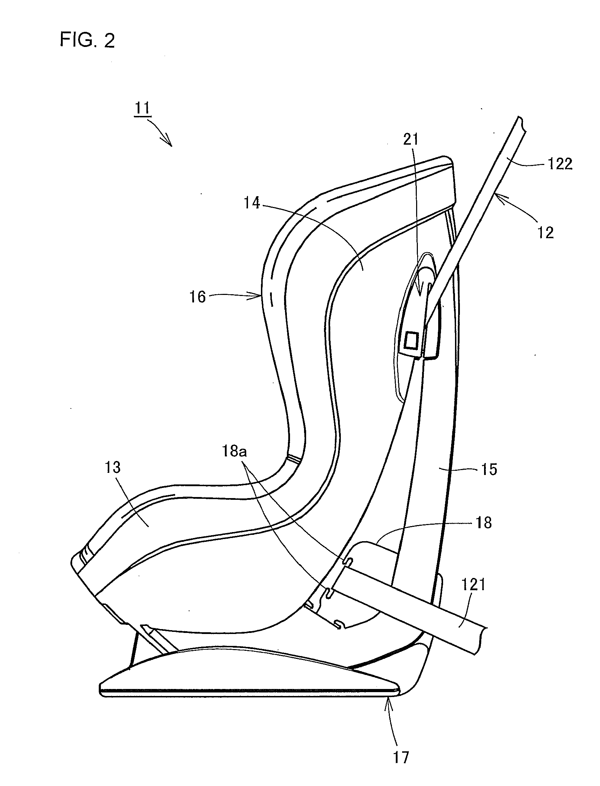

An embodiment of the present invention will be described in detail below with reference to the accompanying drawings. First, an overall structure of a child car seat 11 according to an embodiment of the present invention will be described with reference to Figs. 1 and 2. Note that as used herein, the "longitudinal and lateral directions" are defined based on the direction of gaze of an infant or small child seated on the child car seat 11. That is, as used herein, the "longitudinal direction" corresponds to the lateral direction in the plane of the paper of Fig. 2, and the "lateral direction" corresponds to the direction perpendicular to the plane of the paper of Fig. 2.

Referring to Figs. 1 and 2, the child car seat 11 according to the embodiment of the present invention is an apparatus that is fastened and secured to a seat (not shown) of an automobile by using a seat belt 12 provided in the automobile, and that is used with an infant or small child seated thereon. The child car seat 11 is intended to ensure safety of the infant or small child during traveling of the automobile.

The child car seat 11 includes a seat portion 16 and a base portion 17. The seat portion 16 has: a sitting portion 13 on which the infant or small child is seated; a backrest portion 14 that supports the back of the seated infant or small child from behind; and a pair of right and left shell frames 15 that extend downward from an upper end of the back surface of the backrest portion 14, and that are bent forward near a lower end of the backrest portion 14 to connect to a lower end of the sitting portion 13. The base portion 17 supports the seat portion 16 from below, and allows the seat portion 16 to recline.

A belt threading portion 18 through which a lap belt 121 of the seat belt 12 is threaded is provided in a rear end of the base portion 17. The belt threading portion 18 is provided with a belt latch portion 18a configured to maintain the position of the lap belt 121 threaded through the belt threading portion 18.

The child car seat 11 of the present embodiment includes right and left seat belt lock devices 21 attached to the joint regions between the backrest portion 14 and the right and left shell frames 15, respectively. Each of the seat belt lock devices 21 is a device configured to hold a shoulder belt 122 of the seat belt 12 inside the seat belt lock device 21 itself to stably maintain the position where the shoulder belt 122 restraining the child car seat 11 is held. When the child car seat 11 is in use as shown in Figs. 1 and 2, the shoulder belt 122 is inserted thorough the left seat belt lock device 21. That is, the child car seat 11 is fastened and secured to the seat of the automobile by the lap belt 121 threaded through the belt threading portion 18, and the shoulder belt 122 threaded through the shell frames 15 via the seat belt lock device 21.

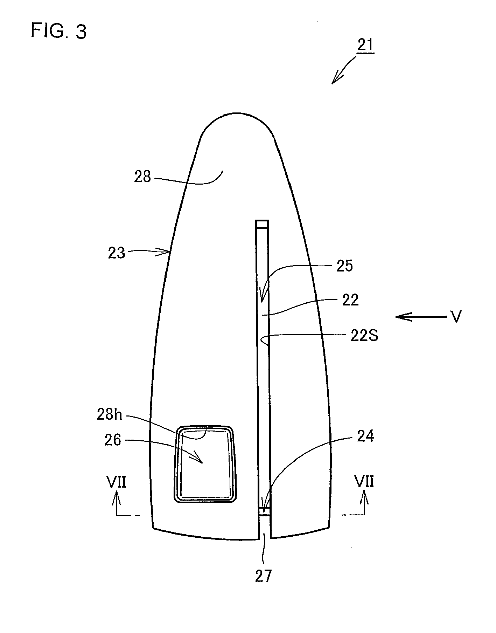

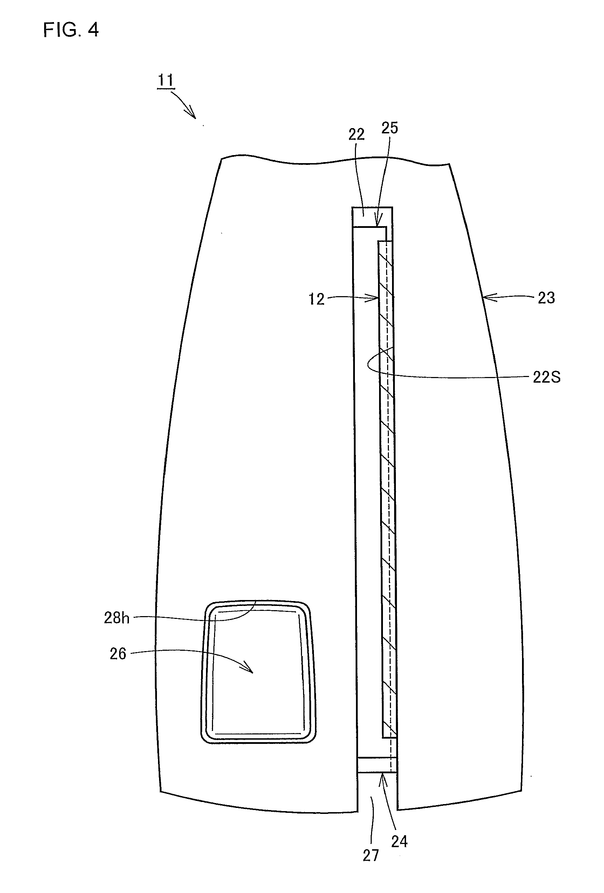

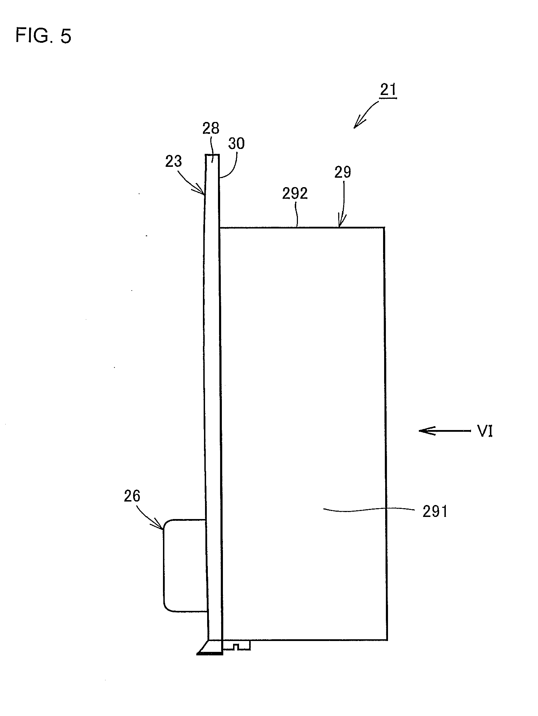

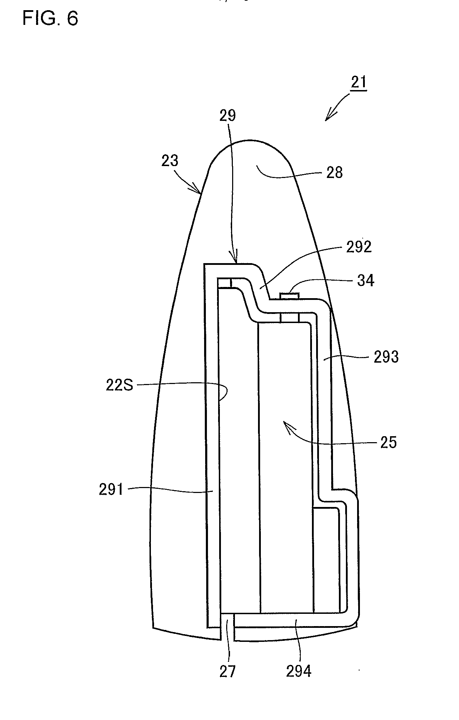

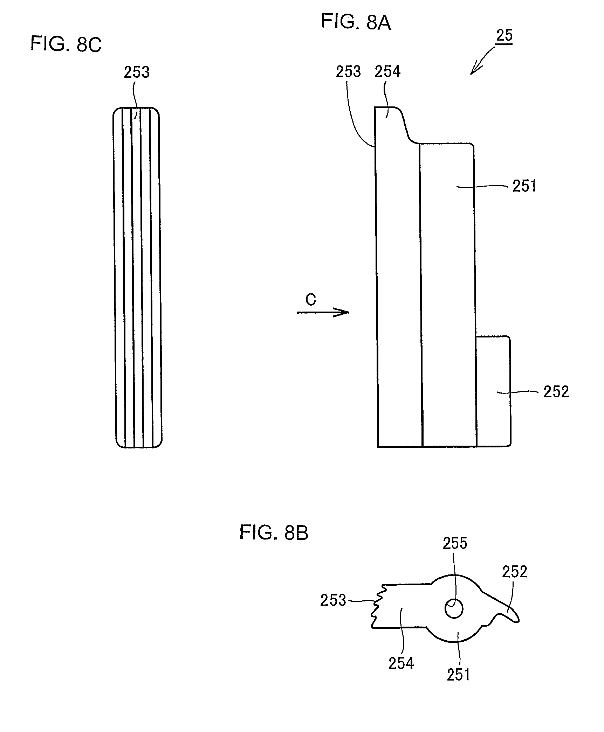

The configuration of the seat belt lock device 21 according to the embodiment of the present invention will be described below with reference to Figs. 3 to 10. Fig. 3 shows the seat belt lock device 21 shown in Fig. 2, namely the seat belt lock device 21 provided on the left side of the child seat 1. Note that in order to facilitate understanding, the seat belt 12 inserted through the seat belt lock device 21 is not shown in Figs. 3, 5, and 6. As described above, the "longitudinal and lateral directions" as used herein are defined based on the direction of gaze of the infant or small child seated on the child car seat 11 of Fig. 2. That is, as used herein, the "longitudinal direction" corresponds to the lateral direction in the plane of the paper of Fig. 3, and the "lateral direction" corresponds to the direction perpendicular to the plane of the paper of Fig. 3.

Referring to Figs. 3 to 10, the seat belt lock device 21 according to the embodiment of the present invention includes: a main body case 23 that defines the outer shape of the seat belt lock device 21; a belt retaining member 24 that is a member supported inside the main body case 23, and that is configured to prevent the seat belt 12 from slipping off downward from the seat belt lock device 21 when the seat belt is locked; a belt lock member 25 that restricts movement of the seat belt 12 when the seat belt is locked; and an operation portion 26 capable of operating the belt retaining member 24 and the belt lock member 25 together.

The main body case 23 has a surface wall portion 28 as a semi-elliptical plate-like member that is long in the vertical direction, and a frame 29 provided so as to protrude rightward from a rear surface 30 of the surface wall portion 28.

A seat belt insertion hole 22, which is configured to have the seat belt 12 inserted therethrough, is provided in a central portion of the surface wall portion 28. The seat belt insertion hole 22 is a recessed hole extending upward from an opening end 27 at a lower end of the seat belt insertion hole 22, and extends substantially straight in the vertical direction. A through hole 28h, which is configured to expose an operation button, described later, to the outside, is provided in a lower front region of the surface wall portion 28.

The frame 29 is formed by a rear wall portion 291 that defines a rear wall surface 22S of the seat belt insertion hole 22, an upper wall portion 292 extending forward from an upper end of the rear wall portion 291, a front wall portion 293 extending downward from a front end of the upper wall portion 292, and a lower wall portion 294 extending rearward from a lower end of the front wall portion 293. The belt retaining member 24, the belt lock member 25, and the operation portion 26 are supported in an internal space that is defined by the wall portions 291 to 294 forming the frame 29.

A gap is provided between the rear wall portion 291 and the lower wall portion 294, and the opening end 27 is defined by this gap. The seat belt 12 can be inserted into the seat belt insertion hole 22 by slipping the seat belt 12 upward into the seat belt insertion hole 22 from the opening end 27.

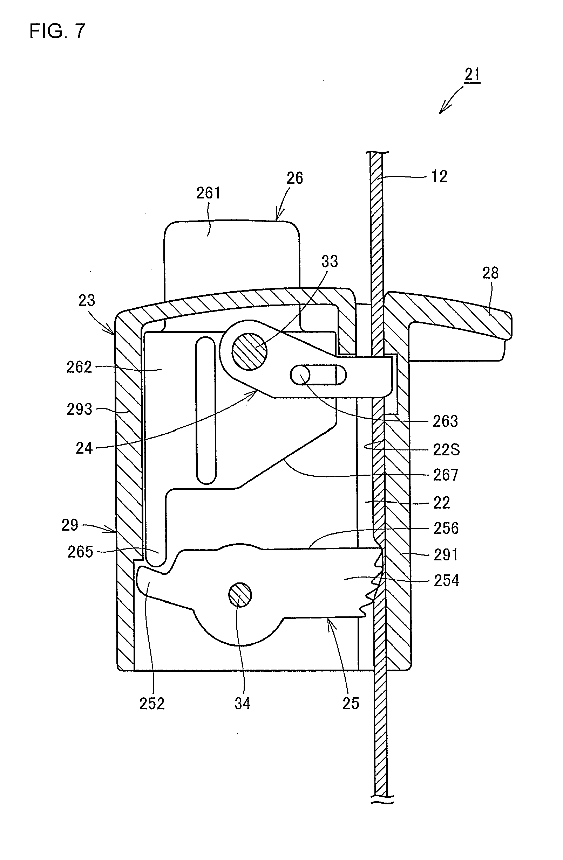

A circular main body case shaft 33, which protrudes upward, is provided in a central portion of the left end (the upper side in the plane of the paper of Fig. 7) of the upper surface of the lower wall portion 294. The main body case 23 is engaged with the belt retaining member 24 by this main body case shaft 33. A shaft 34, which extends from the upper wall portion 292 to the lower wall portion 294, is attached to a central portion of the right side (the lower side in the plane of the paper of Fig. 7) of the frame 29. This shaft 34 is inserted through a through hole provided in the upper wall portion 292 and a recessed hole provided in the lower wall portion 294 (both holes are not shown), and is placed so as to extend between the upper wall portion 292 and the lower wall portion 294 along the direction in which the seat belt insertion hole 22 extends. The belt lock member 25 is pivotally engaged with the main body case 23 via this shaft 34. Note that the engagement structure between these members will be described later in detail.

The belt retaining member 24 is a flat plate-like member. The belt retaining member 24 includes: a retaining portion 241 that is located at a rear end of the belt retaining member 24 and is configured to close the opening end 27 when the seat belt is locked; and an engagement portion 242 that extends obliquely forward from a front end of the retaining portion 241. The retaining portion 241 is provided with a first through hole 243 extending in the longitudinal direction, and the engagement portion 242 is provided with a circular second through hole 244. The belt retaining member 24 is placed on the lower wall portion 294 by inserting the main body case shaft 33 provided on the lower wall portion 294 through the second through hole 244. Thus, the belt retaining member 24 is engaged with the main body case 23 so as to be pivotable about the main body case shaft 33.

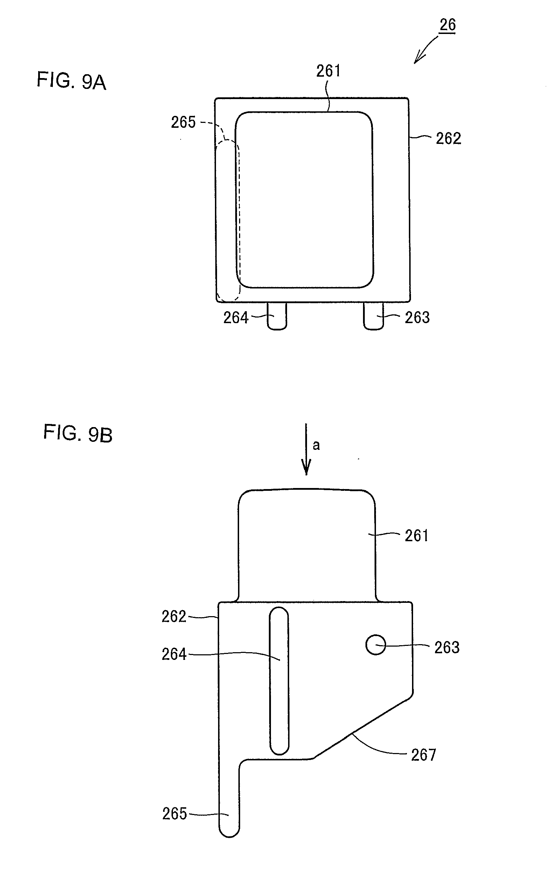

The operation portion 26 is placed above the belt retaining member 24. The operation portion 26 has an operation button 261 protruding outward through the through hole 28h provided in the surface wall portion 28, and an operation portion main body 262 connected to the operation button 261 and contained in the main body case 23. The operation portion main body 262 includes: a circular operation portion shaft 263 provided on the rear side (the right side of the plane of the paper in Figs. 9A and 9B) of the lower surface so as to protrude downward; a leg portion 264 provided on the front side of the lower surface so as to protrude downward, and extending long in the lateral direction; and a plate-like protruding portion 265 provided so as to protrude rightward from a front end of the right side surface of the operation portion main body 262. Note that a tilted surface 267 is formed at a corner in a right rear end of the operation portion main body 262.

The operation portion 26 is placed on the belt retaining member 24 by inserting the operation portion shaft 263 provided on the lower surface of the operation portion main body 262, through the first through hole 243 provided in the belt retaining member 24. Thus, the operation portion 26 is engaged with the belt retaining member 24 by the first through hole 243 and the operation portion shaft 263 inserted in the first through hole 243. At this time, the leg portion 264 provided on the lower surface of the operation portion main body 262 contacts the lower wall portion 294 of the frame 29, thereby stabilizing the attitude of the operation portion 26. Thus, the operation portion 26 is prevented from wobbling when operated, whereby the operation portion 26 can be stably operated.

The belt lock member 25 is pivotally supported in the right-side region of the main body case 23 via the shaft 34 provided in the main body case 23. The belt lock member 25 has a cylindrical portion 251 extending in the vertical direction, a contact portion 252 provided on the front side of the cylindrical portion 251 so as to protrude therefrom and having a predetermined height in the vertical direction, and a lock portion 254 extending rearward from the cylindrical portion 251 and having a plurality of clutch portions 253 as ridges formed at its tip end. The cylindrical portion 251 is a cylindrical member that is long in the vertical direction and that includes a through hole 255 in its center. As described later, the contact portion 252 is a member that contacts the tip end of the protruding portion 265 provided in the operation portion 26, when the operation portion 26 is operated. The contact portion 252 is shaped so as to be able to easily receive the tip end of the protruding portion 265. The lock portion 254 is formed so that its height increases toward the rear side. When the seat belt is locked, the lock portion 254 can effectively restrict movement of the seat belt 12 by the clutch portions 253 provided at the tip end of the lock portion 254. The belt lock member 25 is pivotally supported by the main body case 23 by inserting the shaft 34 through the through hole 255.

In the present embodiment, the belt lock member 25 is always biased clockwise as viewed from the direction shown in Fig. 7, about the shaft 34 by a torsion coil spring (not shown) provided in the main body case 23. The belt lock member 25 locks the seat belt 12 by the elastic force of the torsion coil spring.

Thus, the belt lock member 25 pivots about the shaft 34 to move from a seat belt lock position to a seat belt unlock/release position described later. In this manner, the lock device can be formed with a more compact configuration. Moreover, since the clutch portions 253 can engage with the seat belt 12 to lock the seat belt 12, movement of the seat belt 12 can be more effectively restricted when the seat belt 12 is locked.

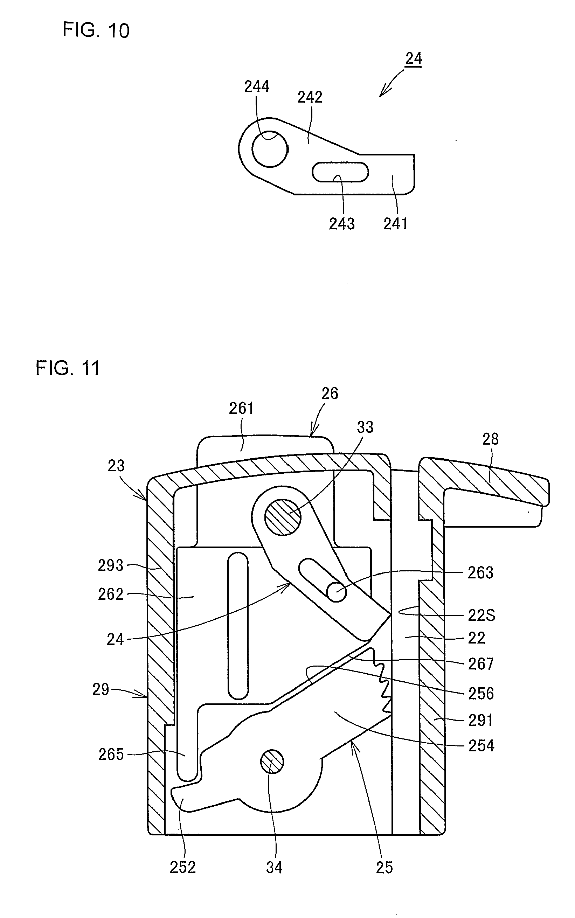

Operation of the seat belt lock device 21 according to the present embodiment will be described below with reference to Figs. 7 and 11. Fig. 7 shows a state in which the seat belt 12 is locked, and Fig. 11 shows a state in which the seat belt 12 is unlocked or released.

As shown in Fig. 7, in the state in which the seat belt 12 is locked, the belt lock member 25 is biased by the torsion coil spring to a position where the belt lock member 25 closes the seat belt insertion hole 22. Thus, if the seat belt 12 has been inserted in the seat belt insertion hole 22, the belt lock member 25 presses the seat belt 12 against the wall surface 22S from the front side (the left side in the plane of the paper of the figure) of the seat belt 12. At this time, the clutch portions 253 provided at the tip end of the lock portion 254 engage with the seat belt 12. This restricts movement of the seat belt 12, thereby locking the seat belt 12.

In the state in which the seat belt 12 is locked as shown in Fig. 7, the retaining portion 241 provided in the belt retaining member 24 closes the opening end 27 of the seat belt insertion hole 22. Thus, the seat belt 12 is held in the seat belt insertion hole 22 above the retaining portion 241, and is prevented from slipping off downward from the opening end 27 of the seat belt insertion hole 22.

As shown in Fig. 7, in the state where the seat belt 12 is locked, the operation portion 26 is located at a first position where the operation button 261 protrudes to the maximum to the outside of the main body case 23. In order to unlock or release the seat belt 12 from this state, the user depresses the operation button 261 toward the main body case 23, thereby moving the operation portion 26 from the first position to a second position shown in Fig. 11. With this movement of the operation portion 26, the operation portion shaft 263 engaging with the first through hole 243 of the belt retaining member 24 presses the wall surface of the first through hole 243 downward in the plane of the paper of Fig. 7. Thus, the operation portion shaft 263 relatively moves within the first through hole 243, and the belt retaining member 24 pivots about the main body case shaft 33. As a result, the belt retaining member 24 pivots to move from a closed position where the opening end 27 is closed as shown in Fig.7 to an open position where the opening end 27 is opened as shown in Fig. 11.

That is, the seat belt lock device 21 according to the present embodiment includes a coupling portion that couples the operation portion 26 and the belt retaining member 24 so that they can operate together. This coupling portion is formed by the first and second through holes 243, 244 provided in the belt retaining member 24, the operation portion shaft 263 inserted in the first through hole 243, and the main body case shaft 33 inserted in the second through hole 244. Thus, in the present embodiment, the coupling structure configured to couple the operation portion 26 and the belt retaining member 24 so that they can operate together is implemented by such a simple configuration.

As the operation portion 26 is moved from the first position to the second position, the protruding portion 265 of the operation portion 26 contacts the contact portion 252 of the belt lock member 25, pressing the contact portion 252 downward in the plane of the paper of Fig. 7. As a result, the belt lock member 25 pivots about the shaft 34 against the elastic force of the torsion coil spring, counterclockwise as viewed from the direction shown in Fig. 7. Thus, the tilted surface 267 formed at the corner in the right rear end of the operation portion main body 262 contacts a side surface 256 of the lock portion 254, whereby movement of the operation portion 26, the belt lock member 25, and the belt retaining member 24 is restricted. In this manner, the belt lock member 25 pivots to move from the belt lock position where the seat belt 12 is locked as shown in Fig. 7 to the belt unlock/release position where the seat belt 12 is unlocked or released, namely the position where the seat belt insertion hole 22 is opened as shown in Fig. 11. In this state, the pressure of the belt lock member 25 on the seat belt 12 is released, allowing the seat belt 12 to move within the seat belt insertion hole 22.

Thus, by depressing the operation button 251, the user can move the belt retaining member 24 and the belt lock member 25 together to the belt unlock/release position. As a result, the seat belt lock device 21 is brought into an unlock/release state in which the seat belt 12 can be inserted into and removed from the seat belt insertion hole 22.

If the user releases the operation portion 26 in the unlock/release state shown in Fig. 11, the belt lock member 25 pivots clockwise as viewed in the direction shown in Fig. 11 due to the elastic force of the torsion coil spring, thereby returning to the belt lock position shown in Fig. 7. Thus, the belt lock member 25 again presses the seat belt 12 against the wall surface 22S, and the clutch portions 253 engage with the seat belt 12 to lock the seat belt 12.

As the belt lock member 25 pivots from the belt lock unlock/release position to the belt lock position, the contact portion 252 presses the protruding portion 265 upward in the plane of the paper in Fig. 11. Thus, the operation portion 26 is pushed back from the second position to the first position. Moreover, the belt retaining member 24 returns from the open position shown in Fig. 11 to the closed position shown in Fig. 7, thereby closing the opening end 27 of the seat belt insertion hole 22. Thus, the seat belt lock device 21 is brought into the lock state.

With the above configuration, the seat belt lock device 21 according to the present embodiment can reliably hold the seat belt 12 within the seat belt insertion hole 22 in the case where the operation of pulling the seat belt 12 is performed with the seat belt 12 being locked, when fastening and securing the child car seat 11 to the seat of the automobile, or in the case where the child car seat 11 is subjected to impact due to a collision etc. This will be described below.

In the case where the seat belt 12 is pulled with the seat belt 11 being locked, or in the case where the child car seat 11 is subjected to impact, a relative force is transmitted from the seat belt 12 to the belt lock member 25 engaging with the seat belt 11. This may move the belt lock member 25 to the belt unlock/release position. In this case, the belt lock member 25 pivots about the shaft 34 from the belt lock position to the belt unlock/release position.

If the belt lock member 25 independently pivots in this manner, the contact portion 252 of the belt lock member 25 is separated from the protruding portion 265 of the operation portion 26. That is, in the case where the belt lock member 25 independently pivots due to an external force, the belt lock member 25 is mechanically disconnected from the operation portion 26. Thus, the operation portion 26 is not affected by such independent pivoting of the belt lock member 25. Accordingly, the position of the operation portion 26 is reliably maintained even if the belt lock member 25 independently pivots as described above. That is, the position of the belt retaining member 24 is also reliably maintained. Thus, the opening end 27 is kept in the closed state, whereby the seat belt 12 can be prevented from slipping off from the seat belt insertion hole 22.

As described above, according to the seat belt lock device 21 of the present embodiment, the seat belt 12 can be reliably held within the seat belt insertion hole 22, even if the belt lock member 25 is moved toward the belt lock unlock/release position when the operation of pulling the seat belt 12 is performed to fasten and secure the child car seat 11 to the seat of the automobile. Thus, the seat belt 12 can be prevented from slipping off from the seat belt lock device 21 when attaching the child car seat 11, whereby the attachment can be performed with greater convenience.

Moreover, even if the child car seat 11 is subjected to impact due to a collision etc., the seat belt lock device 21 can reliably hold the seat belt 12 within the seat belt insertion hole 22 as described above, whereby the position where the seat belt 12 restraining the child car seat 11 is held can be further stabilized. Thus, the child car seat 11 can be more stably fastened and secured to the seat of the automobile via the seat belt 12.

According to the present embodiment, the user can perform the operation of inserting and removing the seat belt 12 and the operation of locking and unlocking or releasing the seat belt 12, by merely depressing the single operation button 261. This makes it easier to install the child car seat 11 on the seat of the automobile.

Note that the present embodiment is described with respect to an example in which the belt lock member is pivotally supported by the main body case, and pivots to move between the belt lock position and the belt unlock/release position. However, the present invention is not limited to this example, and the belt lock member may be supported by the main body case so as to slide between the belt lock position and the belt unlock/release position.

In the present embodiment, mechanical coupling between the operation portion and the belt lock member is implemented by contact between the protruding portion provided in the operation portion and the contact portion provided in the belt lock member. However, the present invention is not limited to this. The present invention may have any configuration as long as a force is transmitted to the belt lock member in the case where the operation portion is shifted from the first position to the second position, and no force is transmitted to the operation portion in the case where the belt lock member independently moves from the belt lock position to the belt unlock/release position. For example, coupling between the operation portion and the belt lock member may be configured by a one-way clutch capable of transmitting only a force in one direction.

The present embodiment is described with respect to an example in which the coupling portion that couples the operation portion with the belt retaining portion so that they can operate together is formed by the first and second through holes and the operation portion shaft and the main body case shaft that are respectively engaged with the first and second through holes. However, the present invention is not limited to this. The present invention may have any coupling structure as long as the operation portion and the belt retaining member operate together as described above.

In the present embodiment, a biasing unit that biases the belt lock member toward the belt lock position is formed by the torsion coil spring that is advantageous in terms of cost. However, the present invention is not limited to this. The present invention may use any member such as a rubber material, a magnet, etc. as long as it is capable of biasing the belt lock member toward the belt lock position.

Although the embodiment of the present invention is described above with reference to the drawings, the present invention is not limited to the illustrated embodiment. Various modifications and variations can be made to the illustrated embodiment without departing from the spirit or scope of the present invention.

The present invention provides highly stable child car seats including a seat belt lock device and capable of being attached with great convenience, and is advantageously used in the car seat manufacturing industry.

## Claims

1. A seat belt lock device provided in a child car seat that is secured to a seat of an automobile by threading a seat belt of said automobile therethrough, comprising:
a main body case 23 having a seat belt insertion hole 22 that extends in one direction from an opening end, and that is capable of receiving said seat belt 12 therein from said opening end;
a belt retaining member 24 that is supported by said main body case so as to be movable between a closed position where said opening end is closed to prevent said seat belt inserted in said seat belt insertion hole from slipping off from said seat belt insertion hole, and an open position where said opening end is opened to allow said seat belt to be inserted and removed into and from said seat belt insertion hole;
a belt lock member 25 that is supported by said main body case so as to be movable between a belt lock position where said belt lock member presses said seat belt from one side of said seat belt inserted in said seat belt insertion hole, thereby pressing said seat belt against a wall surface that defines said seat belt insertion hole, and restricting movement of said seat belt, and a belt unlock/release position where the pressure on said seat belt is released to allow said seat belt to move;
a biasing unit that biases said belt lock member toward said belt lock position;
an operation portion 26 that is supported by said main body case so as to be movable between a first position and a second position, and that when operated so as to move from said first position to said second position, contacts said belt lock member to press said belt lock member toward said belt lock unlock/release position; and
a coupling portion that couples said operation portion and said belt retaining member so that said operation portion and said belt retaining member can operate together, wherein said coupling portion places said belt retaining member at said closed position when said operation portion is located at said first position, and said coupling portion places said belt retaining member at said open position when said operation portion is located at said second position.

2. The seat belt lock device according to claim 1, wherein
said belt lock member 25 is pivotally supported by said main body case via a shaft,
one end of said belt lock member forms a clutch portion 253 as a ridge that engages with said seat belt when said seat belt is locked, and
the other end of said belt lock member forms a contact portion 252 that contacts said operation portion.

3. The seat belt lock device according to claim 1 or 2, wherein said coupling portion is formed by
a first through hole 243 and a second through hole 244 that are provided in said belt retaining member 24,
an operation portion shaft 263 that is provided in said operation portion and is inserted in said first through hole, and
a main body case shaft 33 provided in said main body case and is inserted in said second through hole.

4. The seat belt lock device according to any one of claims 1 to 3, wherein
said operation portion has an operation button 261 placed so as to protrude outward from said main body case, and
said operation portion moves from said first position to said second position when depressed toward said main body case.

5. The seat belt lock device according to any one of claims 1 to 4, wherein
said biasing unit is formed by a spring.

6. A child car seat that is secured to a seat of an automobile by threading a seat belt of said automobile therethrough, comprising:
a sitting portion 13 on which an infant or a small child is seated;
a backrest portion 14 that supports a back of said seated infant or small child from behind; and
said seat belt lock device 21 provided in an upper part on a back side of said backrest portion, and having the characteristic according to any one of claims 1 to 5.
